Europäisches Patentamt

European Patent Office

Office européen des brevets

(19)

(11) Publication number: **0 024 090**
**B1**

(12) **EUROPEAN PATENT SPECIFICATION**

(45) Date of publication of patent specification: **09.05.84**

(21) Application number: **80900526.7**

(22) Date of filing: **22.02.80**

(86) International application number:
**PCT/US80/00174**

(87) International publication number:
**WO 80/01762 04.09.80 Gazette 80/20**

(51) Int. Cl.³: **A 63 F 9/22, G 08 C 21/00, G 10 H 1/18**

(54) **TOUCH PANEL SYSTEM AND METHOD.**

(30) Priority: **23.02.79 US 14450**
**22.08.79 US 68802**
**12.02.80 US 120605**

(43) Date of publication of application:
**25.02.81 Bulletin 81/8**

(45) Publication of the grant of the patent:
**09.05.84 Bulletin 84/19**

(84) Designated Contracting States:
**DE FR GB SE**

(73) Proprietor: **PEPTEK, INCORPORATED**
**9839 Singleton Drive**
**Bethesda, MD 20034 (US)**

(72) Inventor: **PEPPER, William, Jr.**
**9839 Singleton Drive**
**Bethesda, MD 20034 (US)**

(74) Representative: **Ranson, Arthur Terence et al,**
**W.P. Thompson & Co. Coopers Building Church Street**
**Liverpool L1 3AB (GB)**

(56) References cited:
**US - A - 2 562 429**
**US - A - 3 609 203**
**US - A - 3 626 350**
**US - A - 3 699 492**
**US - A - 3 728 480**
**US - A - 3 732 557**
**US - A - 3 793 483**
**US - A - 3 888 491**
**US - A - 4 013 835**
**US - A - 4 018 989**
**US - A - 4 022 971**
**US - A - 4 054 919**
**US - A - 4 071 691**

(56) References cited:
**US - A - 4 071 691**
**US - A - 4 079 194**
**US - A - 4 099 719**
**US - A - 4 121 049**
**US - A - 4 129 747**
**US - A - 4 138 592**
**US - A - 4 156 928**
**US - A - 4 179 124**

**Gametronics Proceedings; issued January 1977; William Pepper, Jr. and Alan J. Rider; The Trazor - A NEW INPUT DEVICE; see pages 115-120**

## Description

Background of the invention

This invention relates to devices for providing information, in the form of electrical signals, about the position of a selected touch point serving as a source or sink of electric current relative to a current-carrying resistance or impedance element. In particular, it relates to devices for converting selected touch points or positions on a surface (reflecting hand motions) into electrical signals to provide an interface between man and machine.

As used herein, the term "a selected touch point" means a point on a surface selectively touched by a portion of a human body, particularly a finger or toe, or a point on a surface touched by an instrument held in the hand or other portion of a human body and controlled by the human, or a point on a surface contacted by a mechanical contrivance which is guided by a human. In the context of this invention "selected" means the direction by the human intellect of the point on the surface that is touched and the determining, by means of current flow through the point touched, of the location or position of said point. In the context of this invention the term "point" encompasses the area of contact between a human finger and a surface, or the area of contact of an implement, such as the pointed end of a stylus, with a surface. Thus, it is intended that the term "selected touch point" exclude non-physically contacting transfers of electrical energy between the touch panel surface and a sensing device or transducer. As used herein the term "current collecting" includes electrical current passing to or from the impedance surface.

This invention is an improvement over the touch panels described in United States Patent Specifications Nos: 4,071,691 and 4,129,747. The phase of the field produced in the resistive surface of those touch panels was not a linear function of position on the surface, introducing an error in the output function unless special techniques were used to compensate for the error.

The present invention substantially overcomes the limitations of the earlier systems. It does not require a pickup surface and is therefore easier to package and manufacture than the earlier systems. It also has improved linearity. It will therefore be seen that it is an improvement in the art of human-machine interfacing.

Brief summary of the invention

The object of the present invention is to provide improvements in touch panel systems and methods.

In one-axis form, a touch-panel embodiment of the invention includes an extended resistance or impedance element, such as a length of Nichrome (Trade Mark) wire, having a termina' at each end or boundary and so disposed that i can be touched at different selected points along its length: an oscillator that varies the potential of both terminal ends or boundaries simultaneously with respect to ground: current-sensing circuitry to measure the current through each terminal or boundary; and normalizing circuitry to produce an output signal proportional to the ratio of one of the currents to the sum of both currents. A level detector monitors the sum of both currents and provides a Presence signal when the sum exceeds a set or predetermined level.

In operation, when the user touches the resistance element, his body presents a relatively low impedance to ground for the oscillator signal, and a small electric current flows through the user's body. The fraction of this current flowing through a termination or boundary is inversely proportional to the distance from the termination of the point touched, and directly proportional to the distance from the other termination or boundary. An output voltage is produced proportional to this fraction, and thus, to the distance from the other terminal. The Presence output provides a binary signal to the utilization device indicating that the resistance element is being touched.

In two-axis form, a rectangular surface of uniform resistivity is used that has four terminals and a resistive coupling network. The characteristics of this network are such that the ratio of the sum of the currents through two of the terminals to the sum of the currents through all four terminals is proportional to the distance from one edge. In a manner similar to that described for the one-axis embodiment, output voltages are simultaneously derived proportional to the X-axis and Y-axis coordinates of the point touched. A two-axis touch panel can also be constructed using a triangular surface with three terminals.

According to the present invention then, a touch panel apparatus for locating a selected touch point (i.e. a point on a surface selectively touched by a part of a human body, or a point on a surface touched by an instrument held and controlled by a human body, or a point on a surface contacted by a mechanical contrivance which is guided by a human) on a current-conducting impedance surface having at least two boundaries, comprising boundary terminations having terminals for connection to an external circuit, is characterised by means for causing an electric current to flow through the selected touch points as the algebraic sum of separate currents through the terminals, and means for translating those separate currents into at least one signal corresponding to the location of the selected touch point relative to the boundaries.

The invention will now be further described by way of example with reference to the following detailed description and accompanying drawings, wherein:

Figure 1 is a schematic diagram illustrating the basic position locating principle incorporated in the invention.

Figure 2 is a block diagram of a one-axis touch panel incorporating the invention.

Figure 3 shows a resistive surface linearized with electrodes of lower resistivity, and circuitry for creating an electric field with any desired orientation.

Figure 4 shows a method of fabricating all parts of the structure of Figure 3 from the same resistive material.

Figure 5 shows another variation of Figure 3 using a pattern of conductive segments.

Figure 6 shows a variation of Figure 5 that is more compact.

Figure 7 is a block diagram of a two-axis touch panel incorporating the invention.

Figures 8a and 8b collectively is a schematic diagram of the circuitry shown in block diagram form in Figure 7.

Figure 9 is a three-terminal pattern of conductive segments for use in a two-axis touch panel or in a three-channel touch-controlled audio mixer.

Figure 10 is a block diagram of a three-channel audio mixer using the structure of Figure 8.

Figure 11 is a block diagram of a one-axis touch panel in which the current source is external to the touch panel.

Figure 12 shows a combination of two one-dimensional touch panels similar to those shown in Figure 2 and Figure 8.

Figure 13 shows a musical instrument employing a multiplicity of one-dimensional touch panels.

Figure 14 is a cross-sectional view of the instrument shown in Figure 13.

Figure 15 shows the construction of thumb control panels used in the instrument shown in Figure 13.

Figure 16 shows the use of notched ridges adjacent to the note-producing touch members of Figure 13.

Figure 17 is a block diagram of the circuitry of the instrument shown in Figure 13.

Figure 18 is a sketch showing a transparent touch panel combined with a display device.

Figure 19 is a sketch of a video game in which a representation of the playing area appears on both the touch panel and the video display.

Detailed description

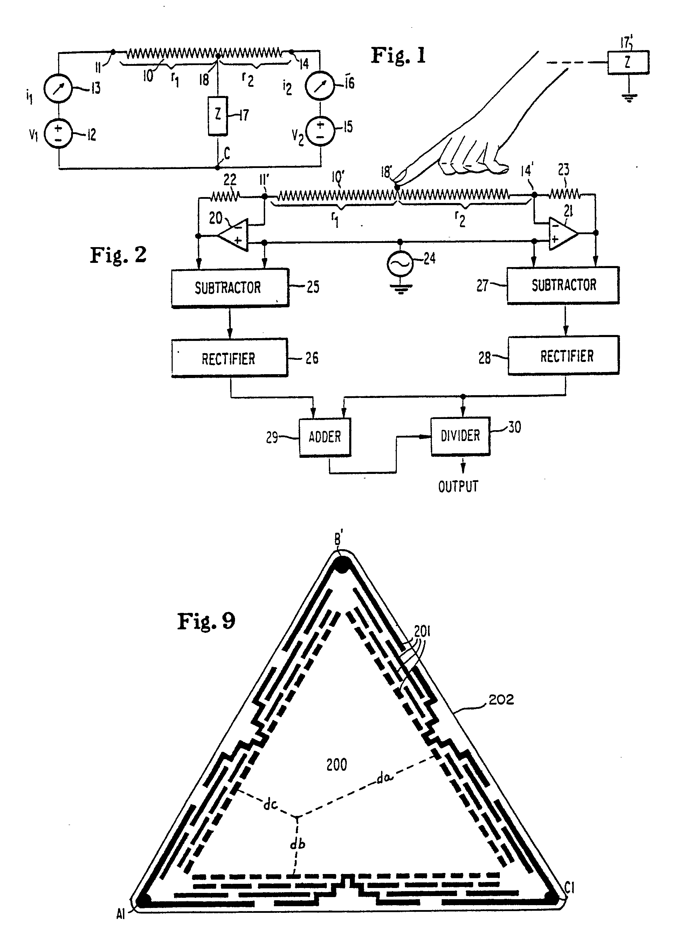

Figure 1 is a schematic diagram illustrating the basic position—transducing principle employed in the invention. Extended impedance or resistance element 10 has a boundary end 11 connected to voltage source 12 through a current-measuring device, ammeter 13, and a boundary end 14 connected to voltage source 15 through a current-measuring device, ammeter 16. The other terminals of the voltage sources have a common connection C, and impedance 17 is connected between common connection C and an arbitrary point 18 on the extended resistance element. Let the total resistance of resistance element 10 be R and let the portion between point 11 and point 18 be $r_1$, and the portion between point 18 and point 14 be $r_2$, as indicated on the diagram. Using Kirchoff's voltage law, equations can be written for the two meshes of this circuit:

(1) $$i_1 r_1 + (i_1 + i_2)Z + v_1 = 0$$

(2) $$i_2 r_2 + (i_1 + i_2)Z + v_2 = 0$$

Subtracting Equation 2 from Equation 1, and substituting $R - r_1 = r_2$, it will be found that:

(3) $$r_1 = \frac{i_2 R - v_1 + v_2}{i_1 + i_2}$$

This can be rearranged to express the dimensionless ratio $r_1/R$ as the sum of two terms:

(4) $$\frac{r_1}{R} = \frac{i_2}{i_1 + i_2} + \frac{v_2 - v_1}{(i_1 + i_2)R}$$

The following three conclusions relevant to the invention can be drawn from Equation 4. First, the expression for ratio $r_1/R$ is independent of impedance Z (hence Z can vary) except that Z must be finite. Second, if the relationship between the position of point 18 and ratio $r_1/R$ is known, then the position of point 18 can be determined from measurements of currents $i_1$ and $i_2$ and voltages $v_1$ and $v_2$ (and knowledge of resistance R). Third, if $v_1 = v_2$, and the relationship between the position of point 18 and ratio $r_1/R$ is known, the position of point 18 can be determined solely from measurements of currents $i_1$ and $i_2$. There are other conclusions that can be drawn but the foregoing amply demonstrates that the position of any point of current flow to or from element 10 can be accurately determined without regard for the impedance Z or the actual resistance of element 10.

Figure 2 is a simplified block diagram of a one-axis touch panel using the principle illustrated by Figure 1. Extended resistance element 10' is in the form of a linear touch panel surface, so that resistance $r_1$ is directly proportional to the distance between end or boundary 11' and any selected touch point 18'. When the user's finger F touches the extended resistance element 10' at point 18', a small current flows through his body impedance, which is schematically represented by a lumped impedance 17', to ground. Operational amplifiers 20 and 21 maintain the ends 11' and 14', respectively, of the extended resistance element 10' at the same instantaneous potential as the a-c output of signal generator 24 by supplying currents through feedback resistors 22 and 23, respectively. The current through feedback resistor 23, which is equal in magnitude and opposite in polarity to the current through $r_2$, produces a voltage which is added to the output of signal generator 24 to give an instantaneous potential at the output of operational amplifier 21:

(5) $\qquad v_{21} = v_{24} - i_2 R_{23}$

where $v_{24}$ is the voltage output of signal generator 24, $i_2$ is the current through $r_2$, and $R_{23}$ is the resistance of the feedback resistor 23. Subtractor 27 instantaneously removes the output voltage of signal generator 24 from $v_{21}$, and rectifier 28 converts the a-c signal into a d-c level proportional to the average magnitude of current $i_2$:

(6) $\qquad v_2 = R\, i_2\, R_{23}$

Summing (adding) circuit 29 adds level $v_2$ to level $v_1$, which is similarly derived from the current through $r_1$ by means of similarly connected amplifier 20, subtractor 25 and rectifier 26. Divider 30 divides $v_2$ by the sum of $(v_1 + v_2)$ to give an output directly proportional to the position of point 18' on touch surface resistance 10':

(7) $\qquad v_{out} = \dfrac{v_2}{v_1 + v_2} = \dfrac{i_2}{i_1 + i_2}$

Linearized resistive surface

The principle demonstrated in Figure 2 and Equation 7 can be extended to two dimensions, using what may be called a linearized resistive surface. The linearized resistive surface can also be used in conjunction with the invention described in the afore-mentioned United States Patent Specifications Nos. 4,071,691 and 4,129,747, and is an improvement on those inventions.

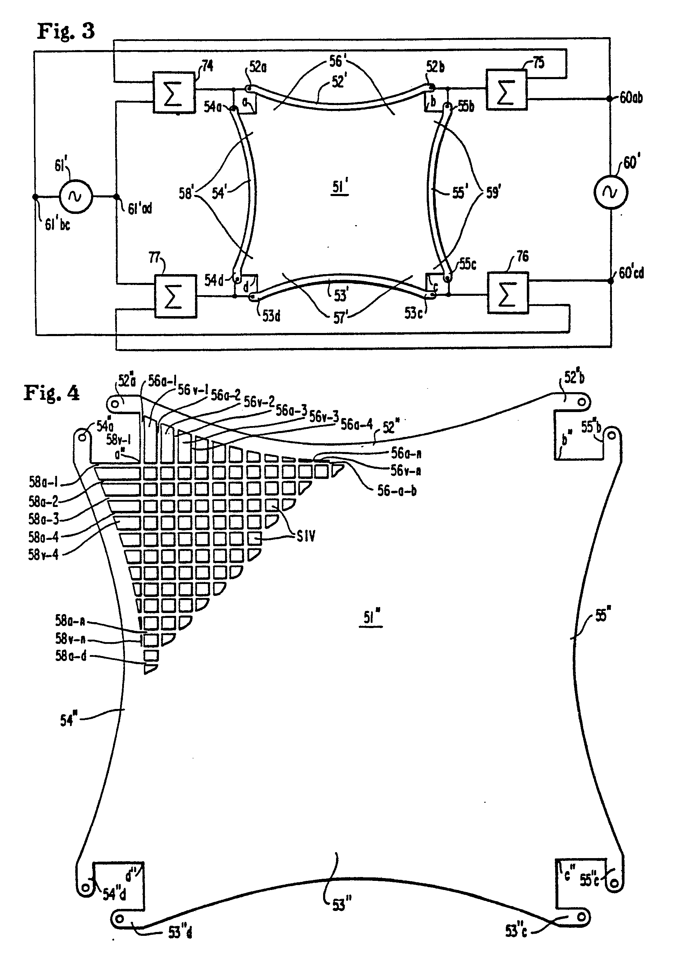

Figure 3 shows a square linearized resistive surface and circuitry for applying voltages to it.

The linearized resistive surface comprises a rectangular surface or plane and an electrode system.

The rectangular plane has uniform resistivity throughout. When appropriate voltages are imposed along its boundaries by the electrodes, the current density is identical in amplitude and direction at all points in the plane so that any accompanying electrical field produced is linear and maintains orthogonality.

The electrodes are substantially linear resistance elements of low resistivity relative to the plane. If a potential difference is established between the ends of an electrode, points along the electrode will assume potentials proportional to their distance from one end. The X electrodes are coupled to the boundaries of the rectangular plane that are normal to the X axis of the plane, and the Y electrodes are similarly coupled to the other two boundaries. Plane surface 51 includes a rectangular square having corners a, b, c, and d and is composed of resistance material of uniform resistivity. Electrodes 52—55 are of low resistivity relative to the resistivity of plane surface 51. These electrodes can be fabricated from the same material as plane surface 51 by appropriate control of the cross-sectional thickness of the plane surface and electrodes, or they can be created by adding a layer of lower-resistivity material along the boundaries of the plane surface by various printing techniques, such as silk screen printing. Connecting parts 56—59 consist of extensions of the square plane surface 51 connecting it to the four electrodes. If the resistivity per square of both the plane surface 51 and the connecting parts 56—59 is $R_1$, the resistance of each of the electrodes 52—55 is $R_2$, and the length of each side of the square is 2, then the boundary between connecting part 56 and electrode 52 is described by:

(8) $\qquad y = 1 + \dfrac{R_2}{2R_1} \displaystyle\int_0^x x\,dx \qquad [-1 \le x \le 1]$

$\qquad\qquad y = 1 + \dfrac{R_2}{4R_1} x^2$

where the origins of the X and Y axes are at the center of the square. The other boundaries are similar. Electrodes 52—55 are identical and preferably have a resistance one-tenth the resistivity per square of the plane. In theory their cross-sectional area should change slightly along their length to give equal increments in resistance for equal increments in distance along the adjacent side of the square; for most purposes the error caused by a uniform cross-sectional area is negligible. The electrodes are extended a short distance beyond the boundary with the connecting parts 56', 57', 58', and 59' as indicated at 52a, 52b, 53c, 53d, 54a, 54d, 55b and 55c, respectively. This distance, as a fraction of the length of one side of the square, is given by:

(9) $\qquad \Delta e = \dfrac{(R_2)^2}{2(R_1)^2}$

Assuming for the moment that the output of signal generator 61 is zero, it will be seen that one polarity of signal generator 60 is connected to summing amplifiers 74 and 75, and these amplifiers drive points 52a, 52b, 54a and 55b to the same potential. The other polarity of signal generator 60 is similarly applied through amplifiers 76 and 77 to points 53c, 53d, 54d and 55c. When a potential difference is created by signal generator 60, it will be found that the voltage at a given height Y is the same for all values of X in the plane. The voltage in electrodes 54 and 55 will also have this value at height Y, so no current will flow between these electrodes and the plane. The potential gradient will therefore be uniform throughout the plane, and since the resistivity is uniform the current density will also be uniform.

It will be apparent from considerations of symmetry that a uniform potential gradient can similarly be created in the Y axis by signal generator 61. When both signal generators apply inputs to the summing amplifiers, the amplifier outputs are the algebraic sums of the inputs. In that case it can be shown, by the superposition principle for linear systems, that the two orthogonal vector components of the current density parallel to the X and Y axes are proportional everywhere in the plane to the respective potential differences applied by the two signal generators.

Figure 4 shows a further embodiment for fabricating the rectangular part of plane surface 51", electrodes 52", 53", 54" and 55", and the connecting parts from the same material. This has the practical advantage that the absolute value of resistivity of the material becomes unimportant. Whereas the resistivities of both the plane and the electrodes must be controlled in the embodiment of Figure 3 in order to control the ratio $R_2/R_1$ (unless the thickness of the material is varied), in the embodiment of Figure 4 this ratio is controlled by geometry and is independent of absolute resistivity.

The resistance structure shown in Figure 4 has "corners" a", b", c", and d", which correspond to corners a, b, c, and d of Figure 3; electrodes 52", 53", 54", and 55" which correspond to electrodes 52, 53, 54, and 55 of Figure 3; and connector tabs 54"a 52"a, 52"b, 55"b, 55"c, 53"c, 53"d, and 54"d at the ends of the electrodes 52", 53", 54" and 55", the letter suffix correlating same to its related corner.

The difference in resistivity between the electrode 52" and the square plane surface 51" and the multiple portions of 56a-1, 56a-2, 56a-3 . . . 56a-n of the connecting parts 56" is achieved by a multiplicity of voids 56v-1, 56v-2 in the material of the connecting parts and 51v in the square plane thereby changing the continuous surface into a network or matrix of small elements. The same plane of voids is provided in each of the connecting parts as is indicated with respect to 58a-1 . . . 58a-n and 58v-1 . . . 58v-n. Such a network can easily be made by a variety of techniques, such as, for example, masking a plane of resistive material with photoresist and etching out the voids, or, as another example, silk-screening the network on an insulating substrate with resistive ink.

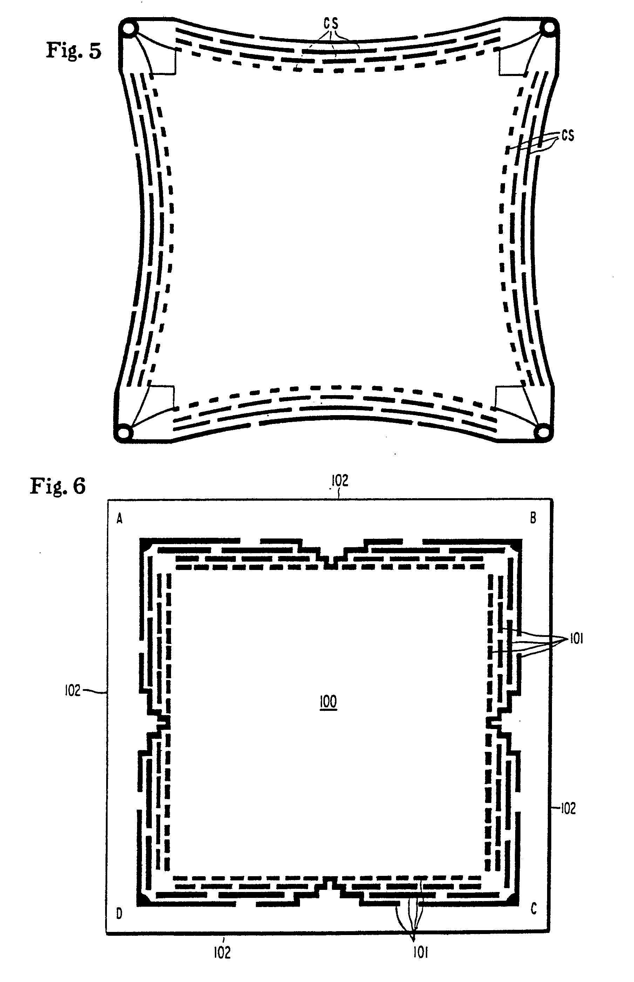

Figure 5 shows another embodiment in which the absolute resistivity does not have to be closely controlled. In this embodiment the resistivity of the electrodes is established by overlaying the resistance with conductive segments. These conductive segments can conveniently be produced by silk screening them with silver-filled ink.

Figure 6 is an embodiment in which the function of the connecting parts in Figure 5 is incorporated into the pattern of conductive segments, reducing the outside dimensions of the device and the amount of resistive material required. The geometry of the electrode segments in Figure 6 was optimized by iterative modification of a system of simultaneous linear equations representing the network of resistances between segments.

It has been found that the structures of Figure 3, Figure 4, Figure 5, and Figure 6 have useful properties in addition to the useful properties already described. If the four terminals of Figure 6, A, B, C, and D, are held at the same instantaneous potential, and a spot on the surface is held at a different instantaneous potential, currents will flow through the four terminals. If these currents are measured with the spot (corresponding to selected touch point 18') at various locations, it can be shown that they are related to the X and Y coordinates of the spot by the equations:

$$(10) \qquad x = k_1 + k_2 \, \frac{i_B + i_C}{i_A + i_B + i_C + i_D}$$

$$y = k_1 + k_2 \, \frac{i_A + i_B}{i_A + i_B + i_C + i_D}$$

wherein $k_1$ is an offset, $k_2$ is a scale factor, and $i_A$, $i_B$ etc are the currents through the respective terminals. In Figure 6, the edges 102 of resistive surface 100 are illustrated as extended solely for purposes of clarity in the drawing. In actual practice the resistive layer may be trimmed or limited to the outer-most conductive segments 101.

Similar results have been obtained with a rectangular linearized resistive surface possessing a non-square aspect ratio and fabricated with the construction shown in Figure 3. In this case constants $k_1$ and $k_2$ differ for the X and Y equations.

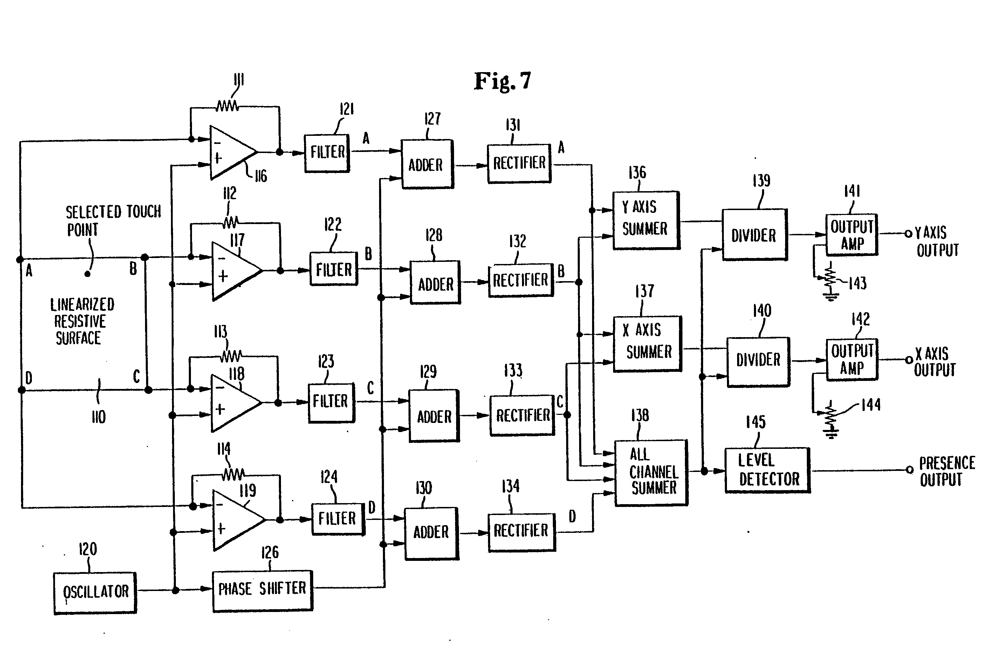

Figure 7 is a block diagram of the preferred embodiment of the invention: a two-dimensional touch panel using the structure of Figure 6. This embodiment is an extension to two dimensions of the principle embodied in Figure 2, and its mathematical basis is as described in the discussion of Figure 6.

When the linearized resistive surface 110 is touched by the user, small currents flow through the four terminals A, B, C, and D. Voltages proportional to these currents are developed across the feedback resistors 111, 112, 113 and 114 of the four input amplifiers 116, 117, 118 and 119, respectively, as the amplifiers follow the output of oscillator 120. The amplifier outputs are applied to four high-pass filters 121, 122, 123 and 124 respectively. These filters are not essential to system operation, but were added to eliminate the 60-Hz signals which may be picked up by the user's body from power wiring. Filters 121—124 attenuate 60-Hz signals while passing the oscillator 120 frequency, which is typically 20 kHz. In a later disclosed embodiment, the 60 Hz (or any radiant ambient environmental energy field) may be used as a source of position signal energy for the touch panel surface.

Subtraction of the oscillator signal component from the filter outputs is accomplished by first shifting the phase of the oscillator signal approximately 180° in phase shifter 126 and then adding the phase-shifted signal to the filter outputs in adder circuits 127, 128, 129 and 130, respectively. The resulting signals are rectified in rectifiers 131, 132, 133 and 134, respectively, to provide d-c levels proportional to the amplitudes of the a-c signals. The levels corresponding to the top two terminals A and B of the linearized resistive surface 110 are summed by the Y-axis summer 136, the levels corresponding to the right-hand two terminals B and C are summed by the X-axis summer 137, and all four levels A, B, C, and D are summed by the all-channel summer 138 to provide a denominator input for the two dividers 139 and 140. These dividers 139 and 140 then operate on the Y-axis and X-axis sums to perform the left hand divisions of equation 10 above, and output amplifiers 141 and 142 with adjustable offset 143 and 144 and gain provide the desired X-axis and Y-axis outputs described by Equation 10. A level detector 145 monitors the all-channel summer 138 output and switches state when the user's finger touches the linearized resistive surface 110.

It is not necessary for the user's finger to make ohmic contact with the linearized resistive surface; a thin insulating layer may be deposited over the resistance material for protection, and capacitive coupling through the insulating layer will still provide adequate current for system operation.

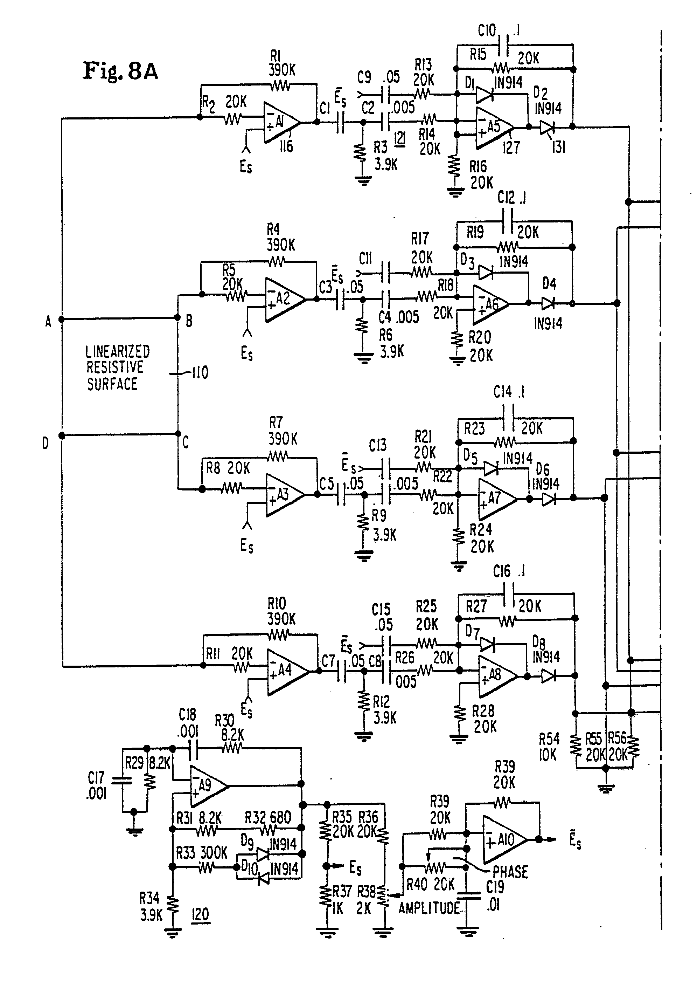

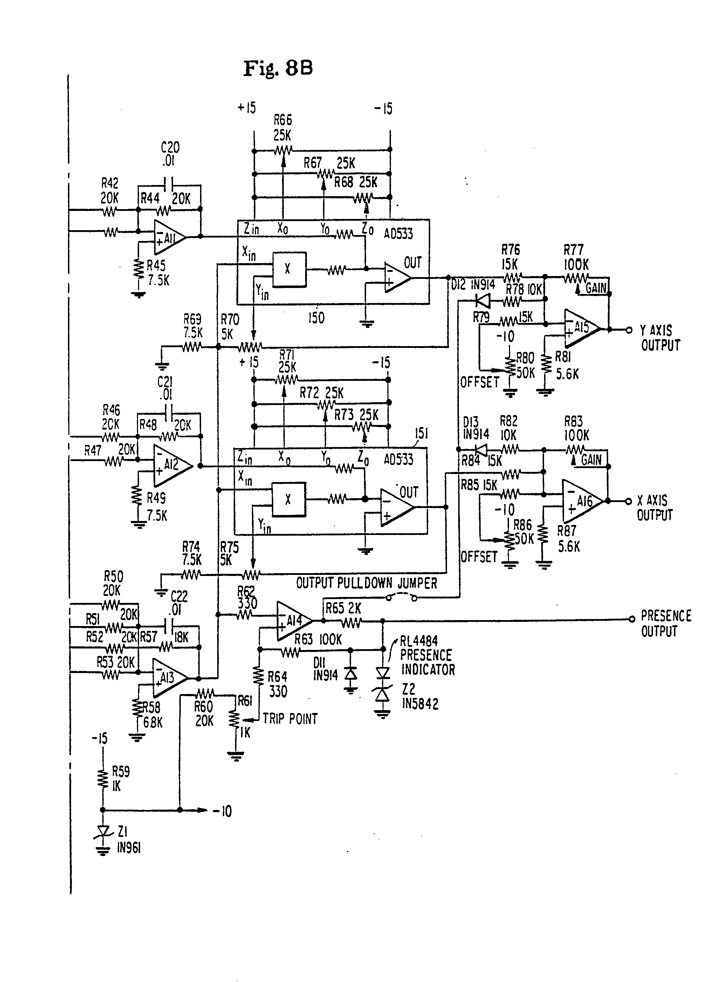

Figure 8 is a schematic diagram of the embodiment of the invention shown in Figure 7. Terminal A of the linearized resistive surface is connected to the inverting input of operational amplifier A1 through isolating resistor R2. The noninverting input is connected to Es, the output of a Wien-bridge oscillator (operational amplifier A9) through a voltage divider, consisting of R35 and R37 (all of which corresponds to oscillator 120 shown in the block diagram of Figure 7), which provides a 20 kHz sine wave with a peak-to-peak amplitude of about 1.3 volts. The output of operational amplifier A1 goes through a filter 121 comprising capacitors C1 and C2 and resistors R3 and R14. The inverting input of operational amplifier As is used as a summing node (and hence corresponds to adder 127 of Figure 7). A phase shifter, operational amplifier A10 (e.g. 126), inverts the oscillator output $E_s$ to provide an out-of-phase signal $\overline{E}_s$ which is coupled through capacitor C9 and is summed through resistor R13 to cancel $E_s$ at the input of A5 (adder 127). The amplitude and phase of $\overline{E}_s$ are adjustable, so that the effect of the capacitance between the linearized resistive surface 110 and ground can also be cancelled.

The circuit of operational amplifier A5 is a precision rectifier providing a d-c output for constant finger position, e.g., selected touch point. Identical circuitry is provided for the other three terminals B, C, and D of the linearized resistive surface, using operational amplifiers A2, A3, A4, A6, A7 and A8.

Operational amplifier A11, constituting the Y axis summer 136 of Figure 7, sums the rectified signals corresponding to terminals A and B; operational amplifier A12, constituting the X-axis summer 137 of Figure 7, sums the signals corresponding to terminals B and C; and operational amplifier A13 constituting the all-channel summer of Figure 7, sums all four signals A, B, C and D. Resistors R54, R55 and R56 equalize the loads on the four precision rectifiers D2, D4, D6 and D8.

Two AD533J analog multipliers 150 and 151 are connected to divide (e.g., perform the dividing function of dividers 139 and 140 of Figure 7) the outputs of operational amplifier A13 (all-channel summer 138 of Figure 7). Operational amplifiers A15 and A16 (corresponding to output amplifiers 141 and 142 of Figure 7) are output scalers allowing variation of output gains and offsets over a wide range to match the characteristics of various utilization devices. Operational amplifier A14 (level detector 143 of Figure 7) is a level detector with hysteresis and an adjustable trip point. When the linearized resistive surface 110 is touched at any selected touch point, a light-emitting diode provides a visual indication thereof and the Presence output switches from 0 to +5 volts. Diodes D12 and D13 and resistors R78 and R82 constitute a pull-down circuit to cause the X and Y outputs to go off-scale when the linearized resistive surface is not touched; removing a jumper disables this feature.

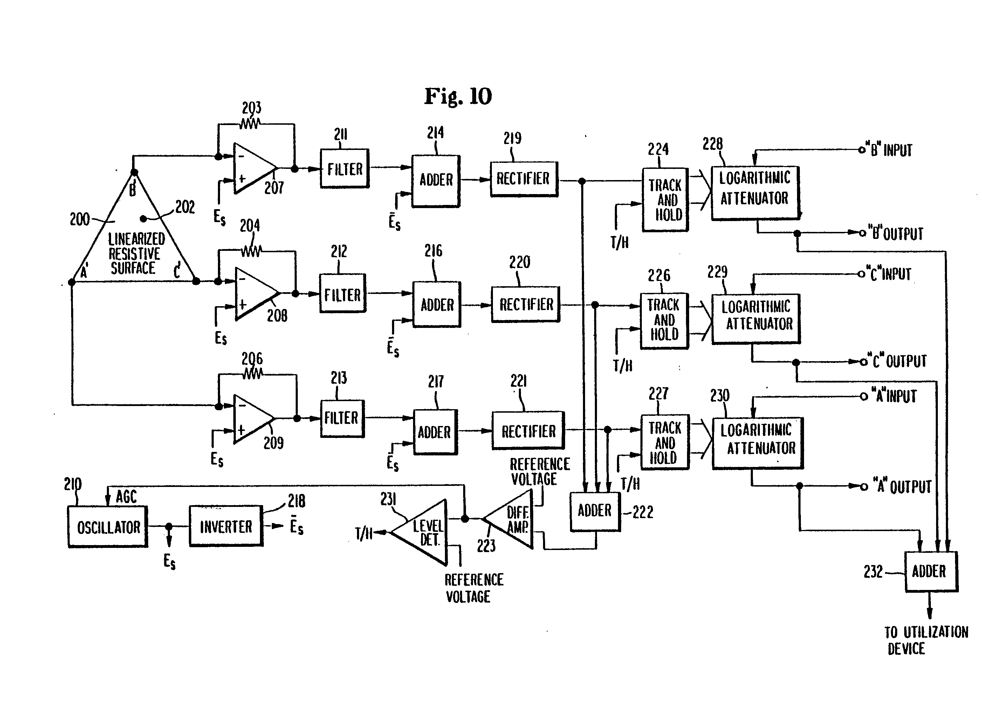

It will be seen that many alternative techniques can be used to accomplish the same normalizing function as the dividers in Figures 7 and 8. For instance, digital outputs can be easily obtained by applying the X and Y axis sums to voltage-to-frequency converters, and counting the output pulses for a period of time proportional to the output of the all-channel summer. Analog normalization can be accomplished by controlling the gains of the input amplifiers with a feedback loop so as to maintain the output of the all-channel summer at a constant value. Another normalization technique is illustrated in Figure 10.

Figure 9 shows a triangular linearized resistive surface 200 using the boundary termination system of Figure 6. The geometry of the conductive segments 201 between each two corners is the same as the geometry of the conductive segments 101 between adjacent corners in Figure 6. A uniform electric field can also be established in this triangular surface in a manner analogous to that described for the rectangular surfaces. In fact, it is possible to provide a uniform field in conjunction with the location or position-detecting apparatus and method of the present invention.

It has been found that if all three terminals A', B', C' are held at the same potential and a spot or selected touch point of the linearized resistive surface 200 is held at a different potential, the currents flowing through the terminals at corners A, B and C follow the relationship:

$$(11) \qquad d_A = k_1 + k_2 \frac{i_A}{i_A + i_B + i_C}$$

wherein $d_A$ is the perpendicular distance from the side opposite corner A to the current source; $i_A$, $i_B$ and $i_C$ are the currents through the corresponding terminals; and $k_1$ and $k_2$ are offset and scale constants. It will be seen that, given any two of the three distances $d_A$, $d_B$ and $d_C$, the two-dimensional location of the selected touch point is determined.

Figure 10 is a block diagram of an audio mixer using the triangular linearized resistive surface 200 of Figure 9. When the linearized resistive surface 200 is touched by the user at any selected touch point 202, currents flow through the terminals at corners A', B' and C'. Voltages proportional to these currents are developed across the feedback resistors 203, 204, and 206 of the three input amplifiers 207, 208 and 209, respectively as the amplifiers follow the output of oscillator 210. The amplifier outputs go to high-pass filters 211, 212 and 213, and the outputs of these filters are supplied to adders 214, 216 and 217 which receive the $\overline{E}_s$ signal for inverter 218 to remove the oscillator signal component as described above for the embodiment illustrated in Figure 7. The resulting signals are rectified by rectifiers 219, 220 and 221 to produce d-c levels proportional to the currents through the three terminals A', B' and C' of the triangular linearized resistive surface 200. An adder 222 sums the three d-c levels.

In this implementation of the invention, the ratios required by Equation 11 are obtained by maintaining the sum of the three d-c levels at a constant amplitude with a reference voltage. The output of differential amplifier 223 is used as an automatic gain control voltage to control the amplitude of the output of oscillator 210.

Each of the three d-c levels also goes to a digital track-and-hold circuit 224, 226 and 227. These circuits, the details of which are described in the literature of analog-digital interfaces, use a combination of digital and analog circuitry to follow an analog input in the track mode and provide a corresponding output in either analog or digital form. When these circuits switch from track to hold mode, a stored digital number maintains the output at its last value. The digital outputs of the track-and-hold circuits are connected to logarithmic attenuators 228, 229 and 230.

These are nonlinear digital-to-analog converters whose details are described in the literature.

Switching of the operation mode of the track-and-hold circuits 224, 226 and 227 is controlled by a level detector 231 analogous in function to the level detector of Figure 7. When the user touches the linearized resistive surface 200, the presence of his finger is sensed by the level detector and the track-and-hold circuits 224, 226 and 227 are switched to the track mode of operation. When he removes his finger, the track-and-hold circuits 224, 226 and 227 switch to the hold mode and maintain the last attenuator settings until the user touches the touch panel again. It will be appreciated that besides use as an audio mixer this technique can be applied to various other arts where it is desired that a plurality of signal levels be provided at a single touch or input by the user.

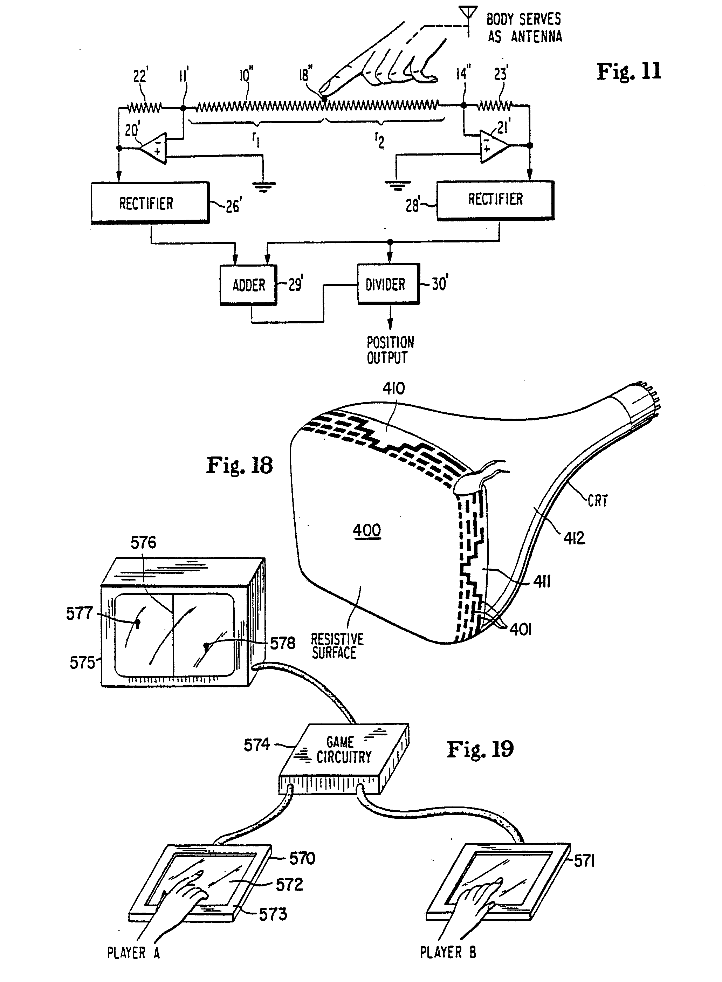

Figure 11 is a block diagram of another embodiment of the invention (shown in one-dimensional form) in which the terminals of the linearized resistive surface are maintained at ground potential and the body of the user serves as an antenna and picks up ambient electrical noise which causes current to flow through selected touch point 18″ to terminals 11″ and 14″.

This technique has the advantage that it imposes no voltage on the body of the user. Although the voltages and currents imposed on the user by the previously discussed embodiments are far below levels that can be felt, and even farther below levels that can do bodily harm, some corporations prefer that products they use impose no voltages or currents whatsoever on the user. Touch panels made using this technique should also be less expensive, as fewer circuit elements are required. In the touch panel of Figure 11, stray voltages on the user's body cause currents to flow through extended resistance element 10″ when it is touched at selected point 18″. These currents flow to virtual ground at ends 11″ and 14″ of the resistance element. Ground potential is maintained at ends 11″ and 14″ by currents supplied through feedback resistors 22′ and 23′ by operational amplifiers 20′ and 21′. Rectifiers 26′ and 28′ convert the output voltages of operation amplifiers 20′ and 21′ to d-c levels, which are summed by adder 29′. Divider 30′ divides the amplitude of one level by the sum of both to produce an output proportional to position of the point touched.

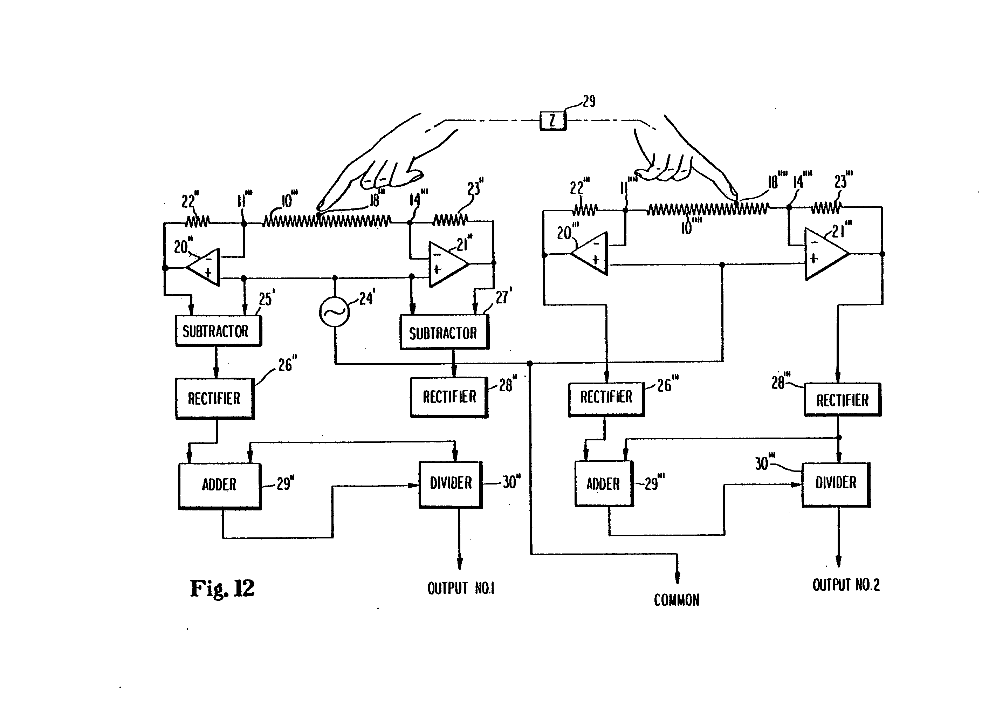

Figure 12 shows the combination of two one-dimensional touch panels similar to the embodiments of Figure 2 and Figure 11. Applications are envisioned for a multiplicity of one-axis touch panels, each operated by a different finger of the user, and for combinations of one-, two- and three-dimensional touch panels. Two one-axis touch panels can be maintained orthogonally related to provide X and Y coordinate readouts for various manually controlled devices. The circuit of Figure 12 is preferably floating relative to ground, unlike the embodiments of Figure 2 and Figure 11, so that it is insensitive to the impedance to ground of the user's body and also insensitive to ambient electrical noise. The circuit relies instead on impedance 29, the impedance Z of the user's body between the points 18''' and 18'''', to simultaneously complete the circuits of Figure 2 and Figure 11.

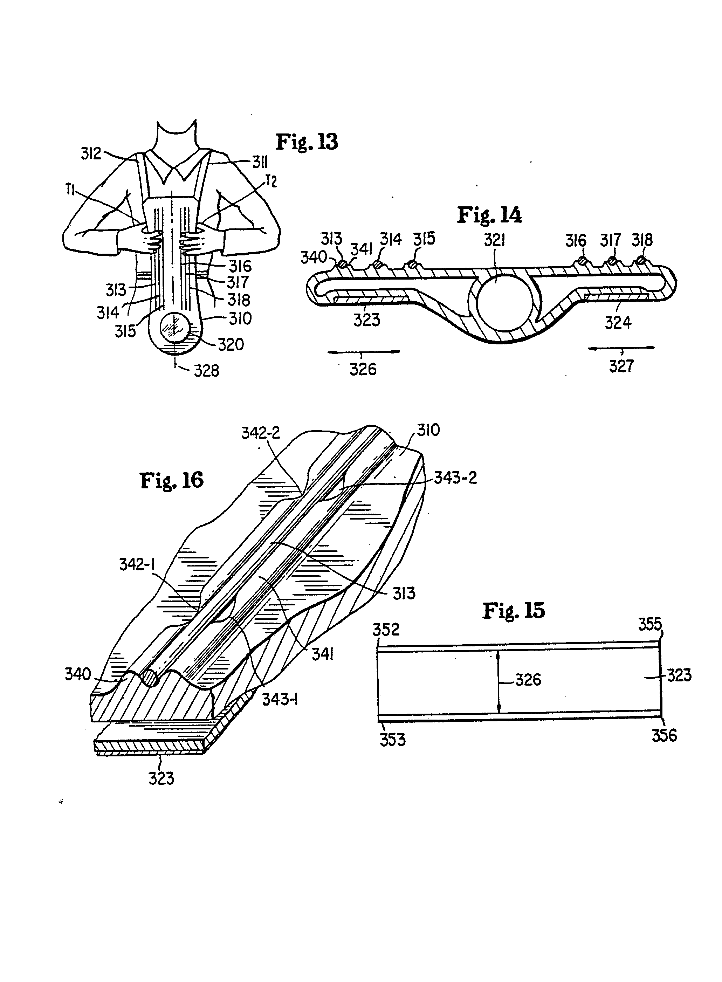

Figure 13 shows a musical instrument employing the combination of one-dimensional touch panels shown in Figure 12. The instrument includes frame 310 having straps 311 and 312 for carrying it, and the front of the instrument has an opening 320 leading to an acoustical cavity incorporating transducers for converting electrical signals to audible musical notes. Each note-producing touch member 313—318 is a one-dimensional touch panel similar to the one associated with Output No. 1 in Figure 12.

Figure 14 is a cross-sectional view of the instrument shown in Figure 13. Thumb control panels 323—324 are one-dimensional touch panels similar to the one associated with Output No. 2 in Figure 12. The control axes 326 and 327 of thumb control panels 323 and 324 are perpendicular to the long axis 328 of the instrument so that the thumbs T1 and T2 of the musician can slide along the respective thumb panels 323 and 324 parallel to the long axis 328 without changing position in the control axes 326 and 327, respectively. Note-producing touch members 313—318 control the pitch, thumb control panel 323 controls the timber, and thumb control panel 324 controls the volume of the notes produced. However, it will be appreciated that other orientations and functions of touch panels and other combinations of one- and two-dimensional touch panels may be incorporated in musical instruments within the context of the present invention.

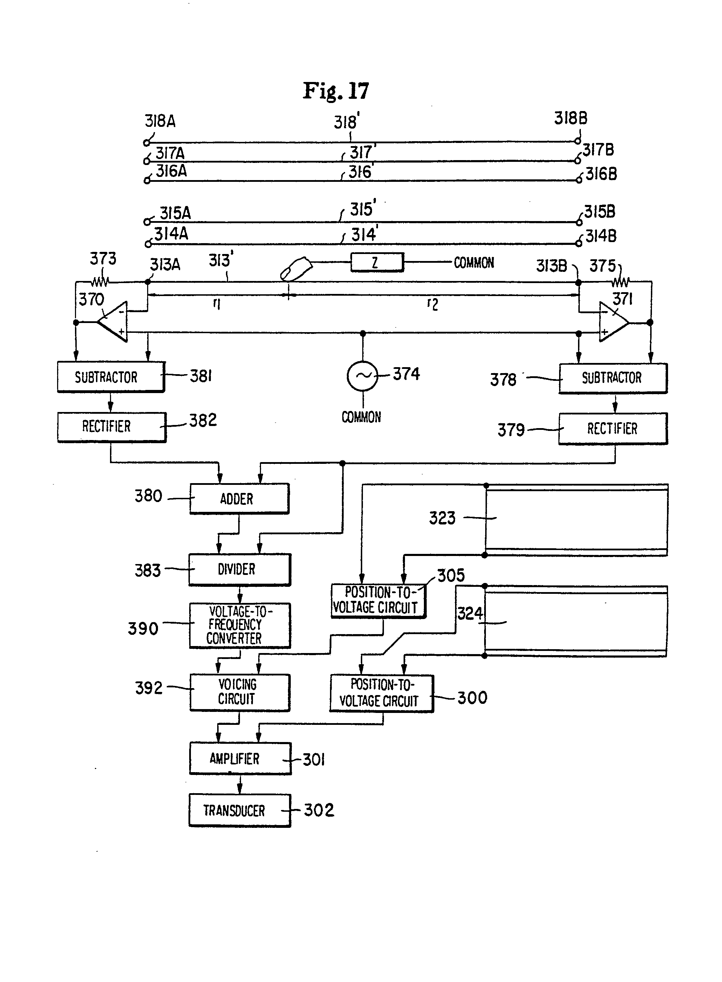

Figure 15 illustrates the construction of thumb control panel 323. The thumb control panels comprise rectangles of uniform resistive material having a resistive touch surface 350, which is the surface contacted by the thumb, and conductive strips 352 and 353 along each of the long edges. Connecting wires 354 and 355 connect the unit in a circuit to be described in connection with Figure 17. Observe that the short dimension of the thumb control panels corresponds functionally to the long dimension of the note-producing touch members.

Figure 16 is an exemplary isometric view of note-producing touch member 313 and the neighbouring structures. Note-producing touch member 313 is a linear resistance element comprising Nichrome (Trade Mark) wire wound on a mandrel. It will be seen that it is confined between ridges 340 and 341, which are an integral part of the non-conducting molded plastic body 310 of the instrument. The ridges are provided with a plurality of spaced notches or indentations 342-1, 342-2, 342-n and 343-1, 343-2, 343-n constituting a tactile means for conveying information, via a touching finger, to the musician playing the instrument. Thus, each note-producing touch member produces a continuously varying pitch of sound when a finger runs up and down it, but the notes of the scale are located by notches 342 in the non-conductive ridges 340. A series of discrete notes can be played by running a finger along a ridge so that it touches the note-producing touch member only at note intervals. Alternatively, portamento can be produced by running the finger directly along the note-producing touch member 313 with the notches 342-1, 342-2 providing tactive information feedback to the musician as his finger passes over the note intervals. Instead of (or in addition to) indentations or notches, braille may be added to convey information to the user, or bumps or other protuberances on the resistance elements 313—318 may be used to convey tactile information to the musician.

Figure 17 is a block diagram of the electronic circuitry. Resistance elements 313', 314', 315', 316', 317' and 318', correspond to the note-producing touch members 313—318 of Figure 13. Each resistance element has a pair of end points 313A, 313B, 314A—314B, ... 318A—318B, which are electrically coupled to a position-to-voltage circuit, the circuit arrangement being illustrated in detail with respect to resistance element 313' in Figure 17. When the user's finger touches element 313' a small current flows through his body impedance Z to the thumb control panels, and hence to a point of common circuit potential. A position voltage is generated as described in conjunction with Figure 2.

The position voltage, which appears at the output of Divider 383, goes to voltage-to-frequency converter 390, which creates a signal whose frequency is a function of finger position. Using techniques well-known in the art of electronic circuit design, a nonlinear element in voltage-to-frequency converter 390 produces an exponential relationship between input voltage and output frequency such that equal increments of input voltage cause equal percentage changes in output frequency. This allows the note-locating notches 342 in ridges 340 to be uniformly spaced instead of being located at logarithmically related intervals as is the case for guitar frets, etc.

The waveform of the signal from voltage-to-frequency converter 390 is modified by voicing circuits 392 using techniques well-known in the electronic music art, under the control of right thumb control panel 323 and its associated position-to-voltage circuit 305. Waveform modifications may include vibrato, echo effects, and variable attack and release as well as changes in timbre of a sustained note. Switches may be included in the instrument to select the control function of the right thumb control panel, and control knobs and foot pedals may also be used to control these waveform modifications as desired. The signal current to operate the right thumb control is supplied by one or more of the right note-producing touch members in the manner shown in Figure 12, and the electronic circuitry associated with each note-producing touch member includes a "presence" circuit that silences the output unless the musician simultaneously touches the note-producing touch member and one of the thumb controls.

As described earlier, left thumb control panel 324 is used to control the volume for all note-producing touch members 313'—318', so the position-to-voltage converter 300 for that element is used as the gain or volume control input to audio amplifier 301 and hence controls the volume of sound emitted by transducer 302.

Figure 18 is a sketch of a contemplated embodiment of the invention in which the extended resistance element is a transparent linearized resistive surface 400 with a configuration similar to that of Figure 6, and is combined with a display device. A suitable resistive surface for this purpose can be made by depositing indium tin oxide on transparent polyester film. The pattern of conductive segments 401 is then silk-screened on the resistive surface with silver-filled epoxy paint. A slight modification of the pattern of Figure 6 allows each side 410, 411 (the other two sides are not shown in Figure 18) of the pattern to be folded back around the display device, shown as a cathode ray tube 412 in Figure 20, or otherwise masked from view. In this way the combination of display and resistive surface requires little more space than the display alone. The linearized resistive surface can also be fabricated directly on other display devices such as flat plasma, electroluminescent, or liquid crystal displays. Circuitry similar to that disclosed in Figure 7 and Figure 8 is also used in this embodiment.

Figure 19 shows two touch panels, each similar to the embodiment of Figure 7, incorporated in an electronic game system. Touch panel 570 is used by player A and touch panel 571 is used by player B.

Player A's finger touching playing surface 572 (which is a replica of the playing surface on the TV display 575) causes generation of X-axis, Y-axis and Presence output signals for the touch panel 570. These output signals go to game circuitry 574, where they are converted to display information for video display 575.

Player A's playing surface 572 is framed by a portion of housing 573, and while it is shown as being rectangularly shaped so as to be a simulation of typical playing surfaces such as basketball, football, tennis, etc., other geometrical configurations, including non-planar surfaces, may be utilized. The function of player B's touch panel 571 is similar.

A representation of the game being played appears on video display 575. If it is a tennis game, for instance, a rectangular outline of the tennis court appears, with line 576 representing the net. The usual sound effects and scoring display (not shown) are produced by game circuitry 574. Player A's racket is represented by game element 577 and player B's racket is similarly represented by game element 578.

The players can move their fingers in all directions on their playing surfaces, and the displayed representations of their rackets will move in corresponding directions on the appropriate sides of the net. Techniques are well-known in the art for creating a representation of a ball and causing it to move, rebound from the rackets, etc.

It will be appreciated that touch panels 570 and 571 may utilize projected images of the playing surfaces that can be changed to represent several different games. Typically the game can be varied widely, as is currently done with game cartridges provided by manufacturers such as Atari, Fairchile and Magnavox. (Trade Marks).

In addition, ball rebound velocity or other game characteristics can be controlled by pressure-sensing means. If the game requires the firing of a gun or other discrete action, this can occur when pressure on the playing surface exceeds a certain threshold, for example. The same function can be accomplished by the Presence output of the touch panel if pressure-sensing means are not incorporated; e.g. the gun fires whenever the player lifts his finger from the playing surface.

While several embodiments of the invention have been disclosed, it will be appreciated that various modifications and adaptations of the invention can be made without departing from the scope of the invention as set forth in the claims appended hereto.

**Claims**

1. A touch panel apparatus for locating a selected touch point, (i.e. a point on a surface selectively touched by a part of a human body, or a point on a surface touched by an instrument held and controlled by a human body, or a point on a surface contacted by a mechanical contrivance which is guided by a human, on a current-conducting impedance surface (10) having at least two boundaries, comprising boundary terminations having terminals (11, 14) for connection to an external circuit, is characterised by means (12, 15, 17) for causing an electric current to flow through the selected touch point (18) as the algebraic sum of separate currents through the terminals (11, 14) and means (20—30) for translating those separate currents into at least one signal corresponding to the location of the selected touch point (18) relative to the boundaries.

2. A touch panel apparatus as claimed in claim 1, having at least three boundaries, characterised in that the separate currents are translated into at least two signals corresponding to the location of the selected touch point relative to at least two non-parallel boundaries.

3. A touch panel apparatus as claimed in claim 1 or 2, characterised in that the means for causing an electric current to flow through the selected touch point includes a circuit for imposing predetermined instantaneous electric potentials on the terminals.

4. A touch panel apparatus as claimed in claim 1, 2 or 3 characterised in that the means for causing an electric current to flow through the selected touch point includes a pathway to earth for radiant energy from ambient electromagnetic sources.

5. A touch panel apparatus as claimed in any one of claims 1 to 4, characterised in that the impedance surface (400) is transparent and in that the apparatus comprises means (412) for displaying visual information in substantially the same plane as the transparent surface (400).

6. A touch panel apparatus as claimed in any one of claims 1 to 5, characterised in that the impedance surface includes a layer (100) of resistive material and the boundary terminations comprise a plurality of rows of conductive segments (101) embedded in, or in electrical contact with, the resistive layer, the conductive segments in each of the rows being longer in the direction of an associated boundary (102) than the conductive segments in the next row more proximate to the centre of the resistive layer.

7. A touch panel apparatus as claimed in any one of claims 1 to 5, characterised in that the impedance surface includes a layer (51″) of resistive material and the boundary terminations (56a-1 to 56a-n, 57a-1 to 57a-n, 58a-1 to 58a-n, and 59a-1 to 59a-n) comprise a plurality of voids, (56v-1 to 56v-n, 57v-1 to 57v-n, 58v-1 to 58v-n, and 59v-1 to 59v-n) in the resistive layer, the voids raising the electrical resistance of a central area of the layer relative to boundary-terminating electrodes (52″, 53″, 54″ and 55″).

8. A touch panel apparatus as claimed in any one of claims 1 to 7, characterised in that the current-conducting impedance surface (350) is carried on the frame (310) of a musical instrument, and in that the means for translating the separate currents into one signal includes means (302) for producing a signal corresponding to the pitch of a note to be played when touched by a finger of a musician.

9. A touch panel apparatus as claimed in any one of claims 1 to 7, characterised in that it includes an electronic video game having a visual display screen (575) and an electronic video game-generating circuit (574) for generating control signals for the visual display screen, including control signals for a visually-displayed, player-controlled game element (577, 578) and coupling at least one control signal therefrom for translation to the electronic video game-generating circuit (574), said at least one control signal defining the position touched by a player of the electronic video game and controlling the position of the visually-displayed player controlled element on the screen.

10. A method of determining the position of the selected touch point on the current-conducting impedance surface (10) of a touch panel apparatus as claimed in claim 1, characterised by measuring (13, 16) electric currents flowing through each of the terminals (11, 14) and determining from values so obtained the location of the selected touch point (18) on the surface (10).

11. A method of determining the position of the selected touch point on the current-conducting impedance surface (10) of a touch panel apparatus as claimed in claim 1, characterised by measuring (13, 16) electric currents flowing through each of the terminals (11, 14) and determining from the values so obtained the location of the selected touch point in two dimensions.

**Patentansprüche**

1. Berührungsfeldvorrichtung zur Lokalisation eines ausgewählten Berührungspunktes, z.B. eines Punktes auf einer Fläche, die von einem Teil eines menschlichen Körpers selektiv berührt wird, oder eines Punktes auf einer Fläche, die von einem von einem menschlichen Körper gehaltenen und kontrollierten Instrument berührt wird, oder ein Punkt auf einer Fläche, die mit einer von einem Menschen geführten mechanischen Einrichtung in Kontakt steht, auf einer stromleitenden Impedanzfläche (10) mit mindestens zwei Begrenzungen, die Begrenzungsabschlüsse mit Anschlüssen (11, 14) zur Verbindung mit einem externen Schalt-kreis aufweisen, gekennzeichnet durch Ein-richtungen (12, 15, 17) zur Erzeugung eines durch den ausgewählten Berührungspunkt (18) fließenden elektrischen Stromes, der die algebraische Summe einzelner Ströme durch die Anschlüsse (11, 14) ist, und Einrichtungen (20—30) zur Übertragung dieser einzelnen Ströme in mindestens ein Signal, das dem Ort des ausgewählten Berührungspunktes (18) relativ zu den Begrenzungen entspricht.

2. Berührungsfeldvorrichtung nach Anspruch 1, mit mindestens drei Begrenzungen, dadurch gekennzeichnet, daß die einzelnen Ströme in mindestens zwei Signale übertragen werden, die dem Ort des ausgewählten Berührungspunktes relativ zu mindestens zwei nichtparallelen Begrenzungen entsprechen.

3. Berührungsfeldvorrichtung nach Anspruch 1 oder 2, dadurch gekennzeichnet, daß die Einrichtungen zur Erzeugung eines elektrischen Stromes durch den ausgewählten Berührungspunkt einen Schaltkreis zur Einprägung vorbestimmter momentaner elektrischer Spannungen an den Anschlüssen einschließen.

4. Berührungsfeldvorrichtung nach Anspruch 1, 2 oder 3, dadurch gekennzeichnet, daß die Einrichtungen zur Erzeugung eines elektrischen Stromes durch den ausgewählten Berührungspunkt einen Pfad für Strahlungsenergie aus umgebenden elektromagnetischen Quellen zur Erde einschließen.

5. Berührungsfeldvorrichtung nach einem der Ansprüche 1 bis 4, dadurch gekennzeichnet, daß die Impedanzfläche (400) transparent ist und daß die Vorrichtung Einrichtungen (412) zur Darstellung optischer Informationen in im wesentlichen der gleichen Ebene wie die transparente Fläche (400) aufweist.

6. Berührungsfeldvorrichtung nach einem der Ansprüche 1 bis 5, dadurch gekennzeichnet, daß die Impedanzfläche eine Schicht (100) aus Widerstandsmaterial enthält und die Begrenzungsabschlüsse eine Anzahl Reihen leitender Segmente (101) aufweisen, die in die Widerstandsschicht eingebettet oder in elektrischem Kontakt damit sind, wobei die leitenden Segmente in jeder der Reihen in der Richtung der zugehörigen Begrenzung (102) länger sind als die leitenden Segmente der nächsten Reihe, die dem Mittelpunkt der Widerstandsschicht näher ist.

7. Berührungsfeldvorrichtung nach einem der Ansprüche 1 bis 5, dadurch gekennzeichnet, daß die Impedanzfläche eine Schicht (51″) aus Widerstandsmaterial enthält und die Begrenzungsabschlüsse (56a-1 bis 56a-n, 57a-1 bis 57a-n, 58a-1 bis 58a-n, und 59a-1 bis 59a-n) eine Anzahl Zwischenräume (56v-1 bis 56v-n, 57v-1 bis 57v-n, 58v-1 bis 58v-n, und 59v-1 bis 59v-n) in der Widerstandsschicht aufweisen, wobei die Zwischenräume den elektrischen Widerstand eines relativ zu den die Begrenzung abschließenden Elektroden (52″, 53″, 54″ und 55″) zentralen Bereiches der Schicht erhöhen.

8. Berührungsfeldvorrichtung nach einem der Ansprüche 1 bis 7, dadurch gekennzeichnet, daß sich die stromleitende Impedanzfläche (350) am Gehäuse (310) eines Musikinstrumentes befindet, und daß die Einrichtungen zur Übertragung der einzelnen Ströme in ein Signal Einrichtungen (302) zur Erzeugung eines Signals enthalten, das der Höhe einer zu spielenden Note entspricht, wenn sie durch einen Finger eines Musikers berührt wird.

9. Berührungsfeldvorrichtung nach einem der Ansprüche 1 bis 7, dadurch gekennzeichnet, daß sie ein elektronisches Videospiel mit einem optischen Anzeigeschirm (575) und einem elektronischen Videospiel-Generationskreis (574) zur Generation von Steuersignalen für ein optisch angezeigtes und Spieler-gesteuertes Spielelement (577, 578) und Kopplung mindestens eines Steuersignals davon zur Übertragung an den elektronischen Videospiel-Generationskreis (574) enthält, wobei mindestens ein Steuersignal die von einem Spieler berührte Stelle des elektronischen Videospiels angibt und die Position des optisch angezeigten, Spielergesteuerten Elements auf dem Schirm steuert.

10. Verfahren zur Bestimmung der Position eines ausgewählten Berührungspunktes auf der stromleitenden Impedanzfläche (10) einer Berührungsfeldvorrichtung nach Anspruch 1, gekennzeichnet durch Messung (13, 16) der durch jeden der Anschlüsse (11, 14) fließenden elektrischen Ströme und Bestimmung des Ortes des ausgewählten Berührungspunktes (18) auf der Fläche (10) aus den so erhaltenen Werten.

11. Verfahren zur Bestimmung der Position eines ausgewählten Berührungspunktes auf der stromleitenden Impedanzfläche (10) einer Berührungsfeldvorrichtung nach Anspruch 1, gekennzeichnet durch Messung (13, 16) der durch jeden der Anschlüsse (11, 14) fließenden elektrischen Ströme und Bestimmung des Ortes des ausgewählten Berührungspunktes in zwei Dimensionen aus den so erhaltenen Werten.

**Revendications**

1. Appareil à panneau à toucher pour localiser un point de touche sélectionné, c'est-à-dire un point sur une surface touché sélectivement par une partie d'un corps humain, ou un point sur une surface touché par un instrument tenu et commandé par un corps humain, ou un point sur une surface contacté par un dispositif mécanique guidé par un humain, sur une surface (10) d'impédance conductrice du courant, ayant au moins deux zones limites, comprenant des terminaisons à bornes (11, 14) de connexion à un circuit extérieur, caractérisé par le fait qu'il comporte des moyens (12, 15, 17) pour faire circuler un courant électrique par le point de touche sélectionné (18) en tant que somme algébrique de courants séparés par les bornes (11, 14) et des moyens (20, 30) pour traduire ces courants séparés en au moins un signal correspondant à la position du point de touche sélectionné (18), par rapport aux limites.

2. Appareil à panneau à toucher selon la revendication 1 ayant au moins trois zones limites, caractérisé par le fait que les courants séparés sont traduits en au moins deux signaux correspondant à la position du point de touche sélectionné, par rapport à au moins deux limites non-parallèles.

3. Appareil à panneau à toucher selon la revendication 1 ou 2 dans lequel les moyens pour faire circuler un courant électrique par le point de touche sélectionné comprennent un circuit pour imposer aux bornes des potentiels électriques instantanés prédéterminés.

4. Appareil à panneau à toucher selon la revendication 1, 2 ou 3 dans lequel les moyens pour faire circuler un courant électrique par le point de touche sélectionné comprennent un passage à la terre pour l'énergie radiante provenant de sources électromagnétiques ambiantes.

5. Appareil à panneau à toucher selon l'une des revendications 1 à 4 dans lequel la surface d'impédance (400) est transparente et il est prévu des moyens (412) pour fournir une information visuelle sensiblement dans le même plan que la surface transparente (400).

6. Appareil à panneau à toucher selon l'une des revendications 1 à 5, dans lequel la surface d'impédance comprend une couche (100) de matériau résistant et les terminaisons de limites comprennent une pluralité de rangées de segments conducteurs (101) noyés dans, ou en contact électrique avec, la couche résistante, les segments conducteurs, dans chacune des rangées, étant plus longs en direction d'une zone limite associée (102) que les segments conducteurs dans la rangée suivante plus proche du centre de la couche résistante.

7. Appareil à panneau à toucher selon l'une des revendications 1 à 5, dans lequel la surface d'impédance comprend une couche (51″) de matériau résistant et les terminaisons des limites (56a-1 à 56a-n, 57a-1 à 57a-n, 58a-1 à 58a-n, et 59a-1 à 59a-n) comprennent une pluralité de vides, (56v-1 à 56v-n, 57v-1 à 57v-n, 58v-1 à 58v-n, et 59v-1 à 59v-n) dans la couche résistante, les vides élevant la résistance électrique d'une zone centrale de la couche, par rapport aux électrodes terminant les limites (52″, 53″, 54″ et 55″).

8. Appareil à panneau à toucher selon l'une des revendications 1 à 7, dans lequel la surface d'impédance (350) conductrice du courant est portée sur le corps (310) d'un instrument de musique, et les moyens de traduction des courants séparés en un signal comprenne des moyens (302) de production d'un signal correspondant à la hauteur d'une note à jouer quand elle est touchée par le doigt d'un musicien.

9. Appareil à panneau à toucher selon l'une des revendications 1 à 7, dans lequel sont prévus un jeu vidéo électronique à écran de présentation visuelle (575) et un circuit générateur (574) de jeu vidéo électronique pour générer des signaux de commande pour l'écran de présentation visuelle, incluant des signaux de commande pour un élément de jeu (577, 578) commandé par le joueur et présenté visuellement, et couplant au moins un signal de commande en provenant, pour traduction au circuit générateur (574) de jeu vidéo électronique, ledit signal de commande définissant la position touchée par un joueur du jeu vidéo électronique et commandant la position sur l'écran de l'élément commandé par le joueur et présent visuellement.

10. Procédé de détermination de la position du point de touche sélectionné sur la surface (10) d'impédance, conductrice du courant, d'un appareil à panneau à toucher, tel que revendiqué dans la revendication 1, caractérisé par le fait qu'on mesure (13, 16) des courants électriques circulant par chacune des bornes (11, 14) et à partir des valeurs ainsi obtenues, on détermine la position du point de touche sélectionné (18) sur la surface (10).

11. Procédé de détermination de la position du point de touche sélectionné sur la surface (10) d'impédance, conductrice du courant, d'un appareil à panneau à toucher, tel que revendiqué dans la revendication 1, caractérisé par le fait qu'on mesure (13, 16) des courants électriques circulant par chacune des bornes (11, 14) et à partir des valeurs ainsi obtenues, on détermine en deux dimensions la position du point de touche sélectionné (18).

**Fig. 1**

**Fig. 2**

**Fig. 9**

**Fig. 3**

**Fig. 4**

Fig. 5

Fig. 6

**Fig. 7**

Fig. 8A

0 024 090

## Fig. 8B

# Fig. 10

0 024 090

0 024 090

Fig. 11

BODY SERVES
AS ANTENNA

RECTIFIER 26'

RECTIFIER 28'

ADDER 29'   DIVIDER 30'

POSITION
OUTPUT

Fig. 18

410

400

CRT

412

411

401

RESISTIVE
SURFACE

Fig. 19

576

577

575

578

574 GAME CIRCUITRY

570
572
573

571

PLAYER A

PLAYER B

8

Fig. 12

OUTPUT NO.1

COMMON

OUTPUT NO.2

0 024 090

**Fig. 13**

312 — 311
T1 — T2
316
313 — 317
314 — 318
315 — 310
320
328

**Fig. 14**

313 341 314 315 321 316 317 318
340
323 324
326 327

**Fig. 16**

342-2 310
343-2
342-1
313
341
340
343-1
323

**Fig. 15**

352 355
326 323
353 356

## Fig. 17